# EUROPEAN PATENT SPECIFICATION

(11) **EP 3 473 492 B1**
(45) Date of publication and mention of the grant of the patent: **04.01.2023**
(21) Application number: 18200630.4
(22) Date of filing: 16.10.2018
(51) Int. Cl.: B60N 2/28

(54) **A CONNECTOR FOR ISOFIX FASTENING SYSTEMS**
VERBINDER FÜR ISOFIX-BEFESTIGUNGSSYSTEME
CONNECTEUR POUR SYSTÈMES DE FIXATION ISOFIX

(30) Priority: 17.10.2017 CN 201721337387 U
(43) Date of publication of application: 24.04.2019
(73) Proprietor: FENIX SAFETY SRL, 707410 Valea Lupului (IASI) (RO)
(72) Inventor: NOVARA, Paolo, 10098 Rivoli (TO) (IT)
(74) Representative: Savoca, Agatino

(56) References cited:
- EP-A1- 2 623 368
- WO-A1-2010/122072
- US-B1- 6 419 199

## Description

### Technical field

The present invention relates in general to the field of safety devices for passenger transport on motor vehicles; in particular, the invention relates to a connector for child safety seat fastening systems.

### Prior Art

Child safety seat fasteners (also called ISOFIX, LATCH etc.) are known, including a pair of arms projecting from the safety seat, which arms engage corresponding anchoring elements integral to the seat of the vehicle.

The coupling between the arm and the anchoring element is carried out by means of a hook, mounted on the arm, which hook engages the anchorage element.

The hook can rotate between an inactive position, in which the anchor element is not engaged, and an active position, in which the anchor element is firmly engaged so that the child seat is firmly secured to the vehicle seat.

According to the prior art, a solution is known consisting in blocking the rotation of the pivotable hook (in engagement position with the anchor element), by means of a metal stem engaging an indentation of such pivotable hook. This metal stem can slide within the arm between a distal position with respect to the pivotable hook (in which the latter is free to rotate), and a proximal position with respect to the pivotable hook (wherein the engagement occurs with said indentation, and the rotation of the pivotable hook is prevented).

An example of a known fastener ot the type above is known from EP 2 623 368.

### Summary of the invention

An object of the present invention is to provide a connector of a simplified type, in order to reduce its manufacturing costs and to increase its application flexibility.

To achieve this result, a connector comprises a locking element configured as a plastic bracket (instead of the metal stem of the prior art) which supports a metal insert engaging the pivotable hook.

In this way, only a part of the locking element is made of a metal material, while the rest of the stem can be made of plastic. This simplifies the manufacturing process, while preserving a sufficiently strong structure, as the locking element, which engages the pivotable hook and prevents rotation, is made of metal.

In addition, the locking element being made of plastic also makes it easy to vary its shape, so as to fit for example with different configurations of the support frame, or to allow the insertion of sensors (as will be better appreciated in the following description), e.g. for detecting the position of the stem, and whether or not the pivotable hook is locked to the anchor element.

The above-mentioned and other embodiments and advantages are achieved, according to an aspect of the invention, by a connector for child safety seat fastening systems having the features defined in claim 1. Preferred embodiments of the invention are defined in the dependent claims.

### Brief description of the drawings

The functional and structural features of some preferred embodiments of a connector according to the invention will now be described. Reference is made to the accompanying drawings, in which:

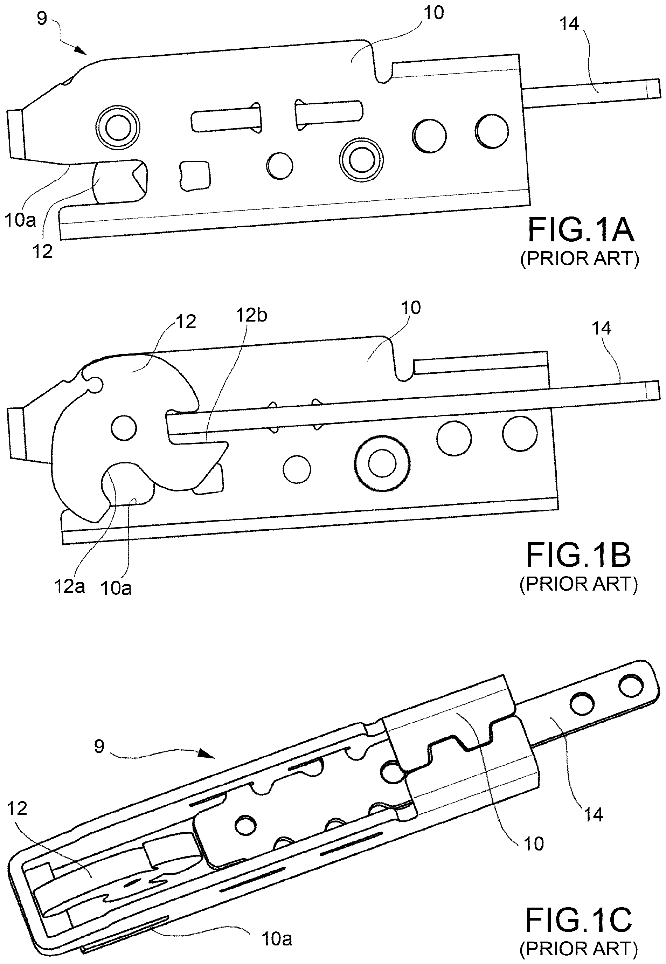

- Figures 1A to 1C are a schematic side view of a connector according to the prior art (from the outside of the support frame), a schematic side view of the same connector from the inside of the support frame, and a schematic perspective view from the top of the same connector, respectively;

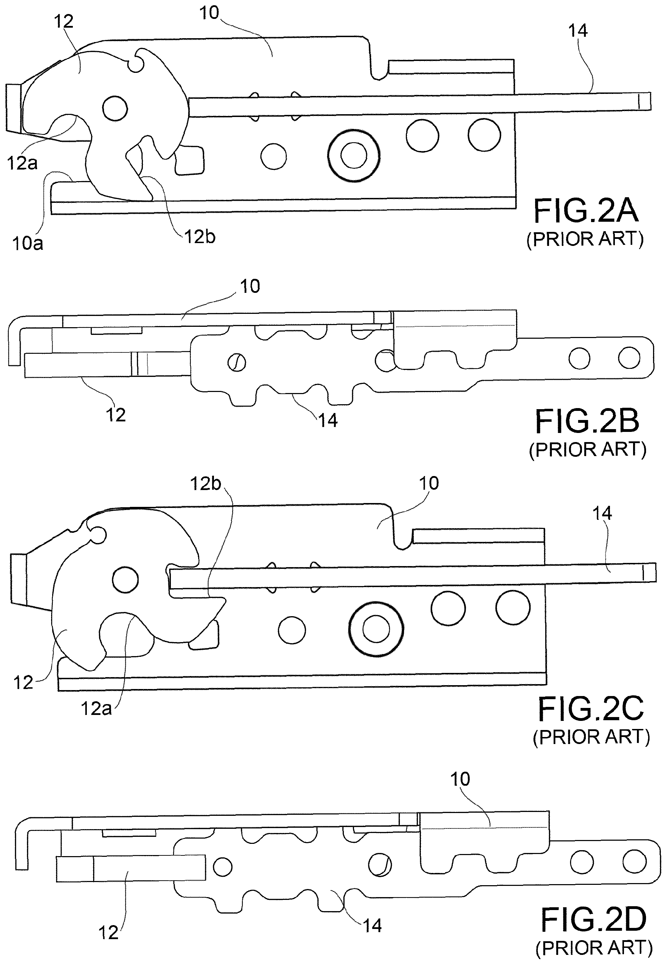

- Figures 2A to 2D are a schematic lateral view of a connector according to the prior art, in which the locking element does not engage the pivotable hook, a schematic top view of the connector according to the configuration shown in Figure 2A, a schematic lateral view of a connector according to the prior art, in which the locking element engages the pivotable hook (which can not rotate), and a schematic top view of the connector according to the configuration shown in Figure 2C, respectively;

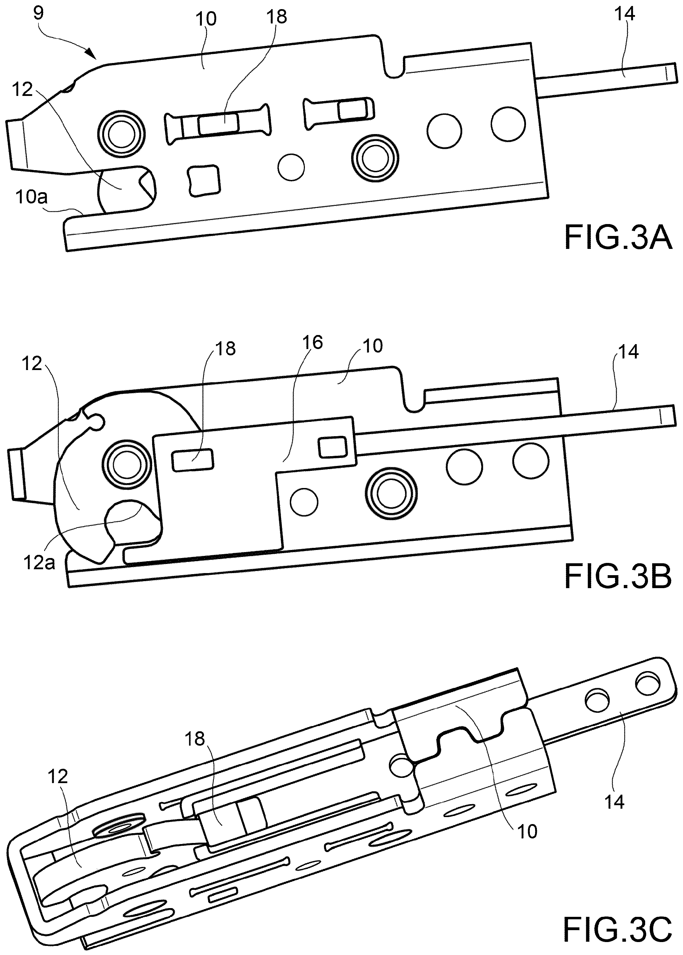

- Figures 3A to 3C are a schematic side view of a connector according to an embodiment of the present invention (from the outside of the support frame), a schematic side view of the same connector from the inside of the support frame, and a schematic perspective view from the top of the same connector, respectively;

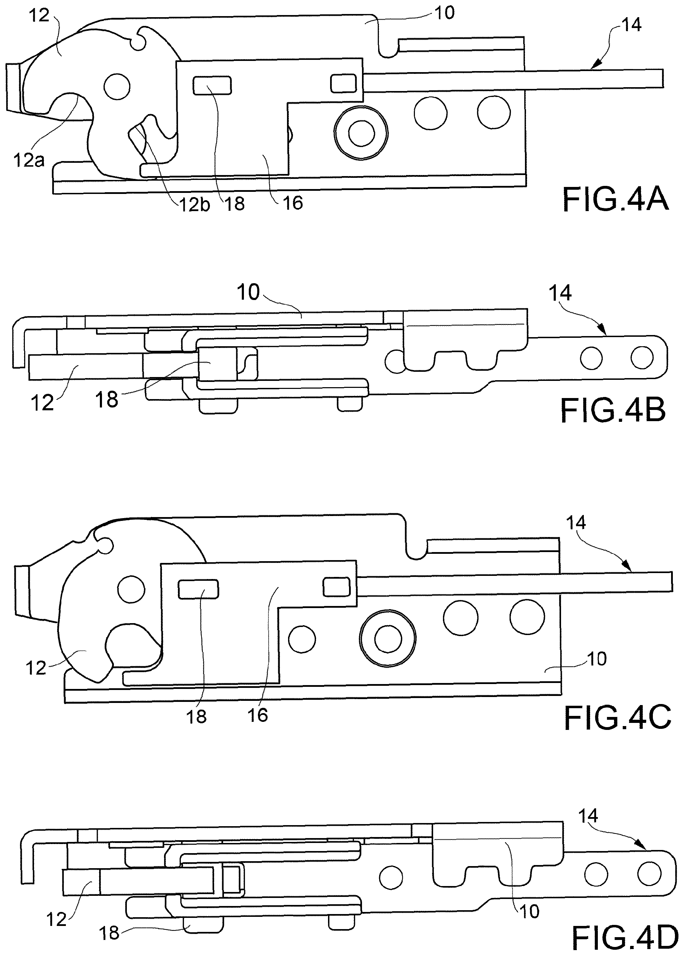

- Figures 4A to 4D are a schematic lateral view of a connector according to an embodiment of the present invention, in which the locking element does not engage the pivotable hook, a schematic top view of the connector according to the configuration shown in Figure 4A, a schematic lateral view of a connector according to according to an embodiment of the present invention, in which the locking element engages the pivotable hook (which can not rotate), and a schematic top view of the connector according to the configuration shown in Figure 2C, respectively;

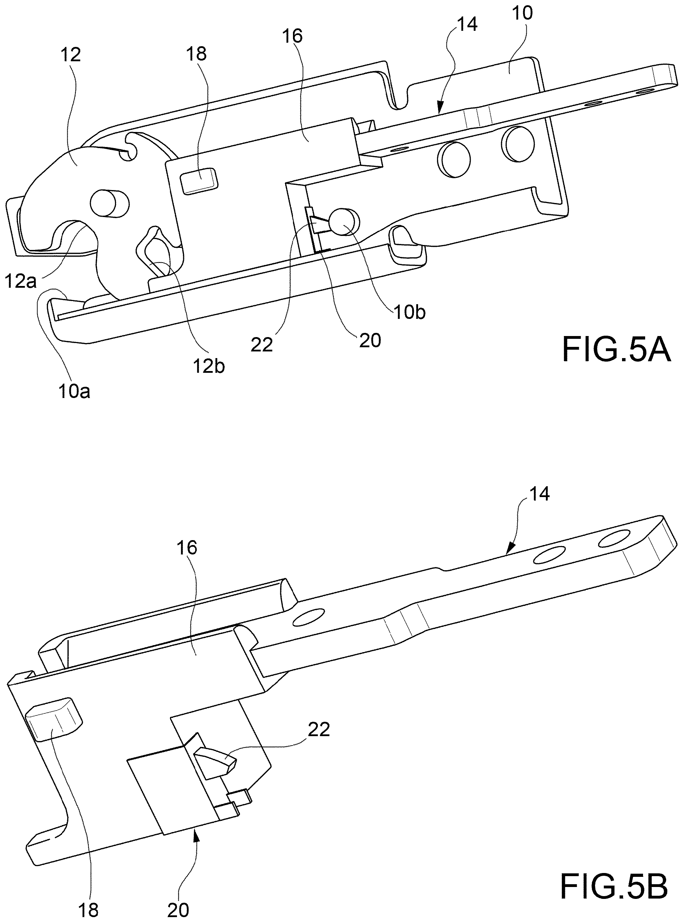

- Figures 5A and 5B are a schematic perspective view of a connector whose locking element carries a position sensor, and a schematic perspective view of the locking element illustrating in greater detail such sensor, respectively; and

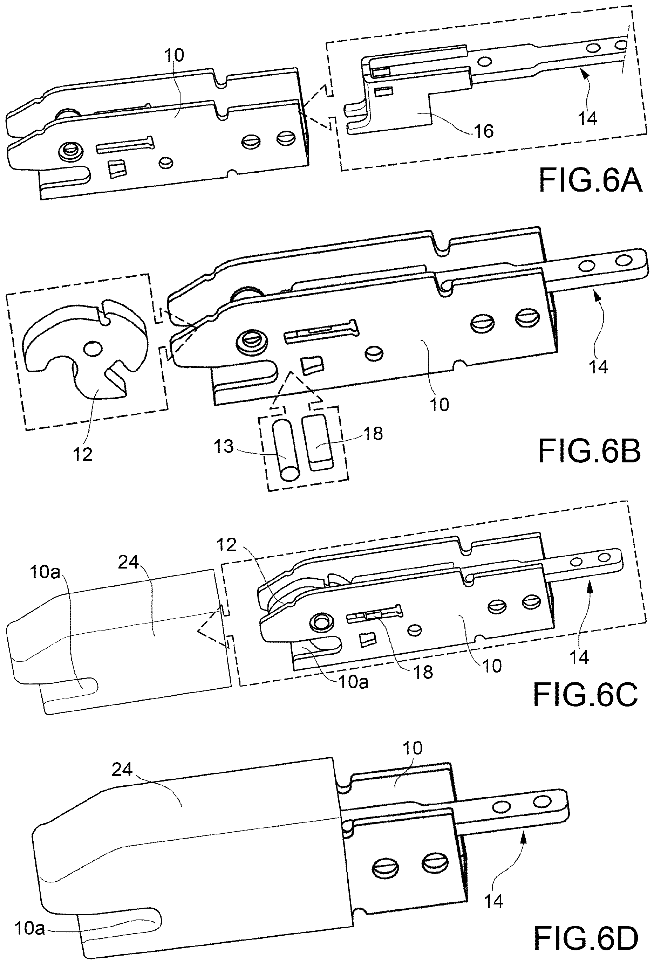

- Figures 6A to 6D are perspective views of a connector according to an alternative embodiment of the present invention, illustrated as an example in a possible mounting sequence to isolate and make more visible the various components of the connector.

### Detailed description of the invention

Before explaining in detail a plurality of embodiments of the invention, it should be clarified that the invention is not limited in its application to the constructive details and to the configuration of the components presented in the following description or illustrated in the drawings. The invention is able to be embodied differently and to be implemented or practically manufactured in a plurality of ways. It should also be understood that the phraseology and terminology have descriptive purpose and should not be interpreted as limiting.

Referring to Figure 3A by way of example, a connector 9 for child safety seat fastening systems comprises a support frame 10 provided with a seat or recess 10a adapted to accommodate an anchoring element secured to the seat of an automobile. This anchoring element, traditionally, is a clamp fixed to a bracket, which is secured to the car seat.

The connector 9 comprises a pivotable hook 12, rotatably mounted on the support frame 10, which pivotable hook 12 is movable between an inactive position, in which the connector 9 is not fastened to said anchoring element, and an active position, in which a first indentation 12a of the pivotable hook 12 engages said anchoring element, securing the connector 9 to the car seat.

A locking element 14 is slidable relative to the support frame 10 between a distal position relative to the pivotable hook 12, wherein said pivotable hook (10) is free to rotate around its axis, and an engagement position, in which one portion of the locking element 14 engages a second indentation 12b in the pivotable hook 10, to block the rotation of the latter.

Such portion of the locking element 14 comprises a plastic bracket 16 supporting a metal insert 18, which metal insert 18 is adapted to engage the second indentation 12b of the pivotable hook 10, so as to block its rotation.

The metal insert 18 can be incorporated into the plastic bracket 16 (so as to be an integral part of the bracket 16) or can be inserted into the bracket 16 once it is already inside the support frame 10, for example by introducing the metal insert 18 into the plastic bracket 16 from the outside of this supporting frame 10 through a through slot in a face of said support frame 10.

The locking element 14 can be held in a certain position (distal or proximal with respect to the pivotable hook 12) for example by elastic means (not shown), against which one must act to engage or disengage the metal insert 18 from said pivotable hook 12.

A sensor 20 is associated with the plastic bracket 16, such sensor 20 being adapted to emit a signal indicating the relative position between the plastic bracket 16 and the pivotable hook 12. The sensor 20 can, for example, detect whether and when the locking element 14 engages the pivotable hook 12, guaranteeing the fastening to the anchoring elements on the car seat.

Conveniently, said sensor 20 is provided with a detecting tab 2 configured so as to contact a protrusion 10b in the body of the support frame 10 when the plastic bracket 16 is located in the distal position with respect to the pivotable hook 12, and so as to avoid to contact said protrusion 10b when the plastic bracket (16) is in the proximal position with respect to the pivotable hook 12.

As an example, Figure 5A shows the configuration according to which the locking element 14 is in the retracted position with respect to the pivotable hook 12, and the detecting tab 22 of the sensor 20 is in contact with the protrusion 10b. In this position, the sensor 20 can be configured, for example, so as not to emit any type of signal. If the bracket was approaching the pivotable hook 12 and the metal insert 18 engages the second indentation 12b, the lack of contact between the detecting tab 22 and the protrusion 10b would result in the signal being emitted by the sensor, indicating that the fastening has taken place.

According to one embodiment, the support frame 10 is a single piece having substantially U-shaped cross-section, rather than comprising two semi-plates to be joined together (as in the embodiments illustrated, for example, in Figures 3A-3C). Such a configuration can be advantageous, since it does not require rivets, or the use of other coupling means.

Optionally, the connector 9 comprises a cover 24 in which the support frame 10 is insertable, said cover 24 having a substantially complementary profile with respect to the profile of at least part of the support frame 10 and the respective seat 10a, so as to fit with this support frame 10.

If the connector includes a support frame 10 configured as a single piece, the cover 24 keeps *inter alia* the inner components of the connector 9 in the correct position, even if there are no coupling means that hold them together. In particular, for example, the metal insert 18 can simply be inserted into the bracket 16 through the slot in the frame 10 without needing to make such insert 18 rigidly integral to the bracket 16 (because the cover 24 limits the transverse movement of the insert 18 with respect to bracket 16, preventing the former from escaping from the latter).

Several aspects and embodiments of a connector for seats have been described according to the invention. It is understood that each embodiment can be combined with any other embodiment. The invention is also not limited to the embodiments described but may be varied within the scope defined by the attached claims.

## Claims

1. A connector (9) for child safety seat fastening systems, comprising:
- a support frame (10), provided with a seat (10a) adapted to accommodate an anchoring element secured to the seat of an automobile;
- a pivotable hook (12), rotatably mounted on the support frame (10), said pivotable hook (12) being movable between an inactive position, in which the connector (9) is not fastened to said anchoring element, and an active position, in which a first indentation (12a) of the pivotable hook (12) engages said anchoring element, securing the connector (9) to the car seat; and
- a locking element (14), slidable relative to the support frame (10) between a distal position relative to the pivotable hook (12), wherein said pivotable hook (10) is free to rotate around its axis, and an engagement position, in which one portion of the locking element (14) engages a second indentation (12b) in the pivotable hook (10) to block its rotation;
**characterized in that** the locking element (14) comprises a plastic bracket (16) supporting a metal insert (18), said metal insert (18) being adapted to engage said second indentation (12b) in the pivotable hook (10), so as to block its rotation;
and **in that** a sensor (20) is associated with the plastic bracket (16), said sensor (20) being adapted to emit a signal indicating the relative position between the plastic bracket (16) and the pivotable hook (12).

2. A connector according to claim 1, wherein said sensor (20) is provided with a detecting tab (22) configured so as to contact a protrusion (10b) in the body of the support frame (10) when the plastic bracket (16) is located in the distal position with respect to the pivotable hook (12), and so as to avoid to contact said protrusion (10b) when the plastic bracket (16) is in the proximal position with respect to the pivotable hook (12).

3. A connector according to claim 1, wherein the support frame (10) is a single piece having a substantially U-shaped cross-section.

4. A connector according to any one of the preceding claims, comprising a cover (24) in which the support frame (10) is insertable, said cover (24) having a substantially complementary profile with respect to the profile of at least part of the support frame (10) and the respective seat (10a).

## Patentansprüche

1. Verbinder (9) für Kindersicherheitsitzbefestigungssysteme, der aufweist:
- einen Stützrahmen (10), der vorgesehen ist mit einem Sitz (10a), der zur Aufnahme eines an dem Sitz eines Automobils gesicherten Verankerungselements angepasst ist;
- einen drehbaren Haken (12), der drehbar an dem Stützrahmen (10) befestigt ist, welcher drehbare Haken (12) zwischen einer inaktiven Position, in der der Verbinder (9) nicht an dem Verankerungselement befestigt ist, und einer aktiven Position, in der eine erste Ausnehmung (12a) des drehbaren Hakens (12) mit dem Verankerungselement zur Sicherung des Verbinders (9) an dem Autositz in Eingriff kommt, bewegbar ist; und
- ein Verriegelungselement (14), das relativ zu dem Stützrahmen (10) zwischen einer fernen Position relativ zu dem drehbaren Haken (12), in der der drehbare Haken (10) frei um seine Achse drehbar ist, und einer Eingriffsposition, in der ein Abschnitt des Verriegelungselements (14) mit einer zweiten Ausnehmung (12b) in dem drehbaren Haken (10) zur Blockierung seiner Drehung in Eingriff kommt, gleitend bewegbar ist;
**dadurch gekennzeichnet, dass** das Verriegelungselement (14) eine Plastikklammer (16) aufweist, die einen Metalleinsatz (18) hält, der angepasst ist zum Eingreifen in die zweite Ausnehmung (12b) in dem drehbaren Haken (10), zur Blockierung seiner Drehung;
und dadurch, dass ein Sensor (20) der Plastikklammer (16) zugeordnet ist, der angepasst ist zur Aussendung eines Signals, das die relative Position zwischen der Plastikklammer (16) und dem drehbaren Haken (12) anzeigt.

2. Verbinder nach Anspruch 1, bei dem der Sensor (20) mit einer Erfassungszunge (22) versehen ist, die dazu konfiguriert ist, mit einem Vorsprung (10b) in dem Körper des Stützrahmens (10) in Kontakt zu sein, wenn die Plastikklammer (16) sich in der fernen Position in Bezug auf den drehbaren Haken (12) befindet, und einen Kontakt mit dem Vorsprung (10b) zu vermeiden, wenn die Plastikklammer (16) in der nahen Position in Bezug auf den drehbaren Haken (12) ist.

3. Verbinder nach Anspruch 1, bei dem der Stützrahmen (10) ein einzelnes Teil ist, das einen im Allgemeinen U-förmigen Querschnitt aufweist.

4. Verbinder nach einem der vorhergehenden Ansprüche, der eine Abdeckung (24) aufweist, in die der Stützrahmen (10) einsetzbar ist, welche Abdeckung (24) ein im Wesentlichen komplementäres Profil in Bezug auf das Profil mindestens eines Teils des Stützrahmens (10) und des entsprechenden Sitzes (10a) aufweist.

## Revendications

1. Connecteur (9) pour systèmes de fixation de siège de sécurité pour enfants, comprenant :
- un cadre de support (10), doté d'un siège (10a) adapté pour recevoir un élément d'ancrage fixé au siège d'une automobile ;
- un crochet pivotant (12), monté de manière rotative sur le cadre de support (10), ledit crochet pivotant (12) pouvant être déplacé entre une position inactive, dans laquelle le connecteur (9) n'est pas fixé audit élément d'ancrage, et une position active, dans laquelle une première indentation (12a) du crochet pivotant (12) met en prise ledit élément d'ancrage, solidarisant le connecteur (9) au siège de voiture ; et
- un élément de verrouillage (14), pouvant coulisser par rapport au cadre de support (10) entre une position distale par rapport au crochet pivotant (12), dans laquelle ledit crochet pivotant (10) est libre de tourner autour de son axe, et une position de mise en prise, dans laquelle une portion de l'élément de verrouillage (14) met en prise une seconde indentation (12b) dans le crochet pivotant (10) pour bloquer sa rotation ;
**caractérisé en ce que** l'élément de verrouillage (14) comprend une console en plastique (16) supportant une pièce rapportée en métal (18), ladite pièce rapportée en métal (18) étant adaptée pour mettre en prise ladite seconde indentation (12b) dans le crochet pivotant (10), de manière à bloquer sa rotation ;
et **en ce qu'**un capteur (20) est associé à la console en plastique (16), ledit capteur (20) étant adapté pour émettre un signal indiquant la position relative entre la console en plastique (16) et le crochet pivotant (12).

2. Connecteur selon la revendication 1, dans lequel ledit capteur (20) est doté d'une patte de détection (22) configurée de manière à entrer en contact avec une protubérance (10b) dans le corps du cadre de support (10) lorsque la console en plastique (16) est située dans la position distale par rapport au crochet pivotant (12), et de manière à éviter d'entrer en contact avec ladite protubérance (10b) lorsque la console en plastique (16) est dans la position proximale par rapport au crochet pivotant (12).

3. Connecteur selon la revendication 1, dans lequel le cadre de support (10) est une pièce unique ayant une section sensiblement en forme de U.

4. Connecteur selon l'une quelconque des revendications précédentes, comprenant un cache (24) dans lequel le cadre de support (10) est insérable, ledit cache (24) ayant un profil sensiblement complémentaire par rapport au profil d'au moins une partie du cadre de support (10) et du siège (10a) respectif.
